# EUROPEAN PATENT SPECIFICATION

(11) **EP 1 718 006 B1**
(45) Date of publication and mention of the grant of the patent: **25.06.2008**
(21) Application number: 05785140.4
(22) Date of filing: 08.09.2005
(51) Int. Cl.: H04L 12/56

(54) **A RESOURCE ADMISSION CONTROL SUBSYSTEM IN NGN AND METHOD THEREOF**
EIN RESSOURCEN ZULASSUNGSKONTROLLUNTERSYSTEM IN NGN UND VERFAHREN DAZU
SOUS-SYSTEME DE COMMANDE D'ADMISSION DE RESSOURCES DANS NGN ET SON PROCEDE

(30) Priority: 08.09.2004 CN 200410074284
(43) Date of publication of application: 02.11.2006
(73) Proprietor: Huawei Technologies Co., Ltd., Longgang District, Shenzhen Guangdong 518129 (CN)
(72) Inventor: LIU, Enhui, Huawei Administration Building, Guangdong 518-129 (CN)
(74) Representative: Pfenning, Meinig & Partner GbR
(86) International application number: PCT/CN2005/001426
(87) International publication number: WO 2006/026923

(56) References cited:
- WO-A-02/05068
- WO-A1-00/38374
- KR-B1- 100 447 197
- HUAWEI TECHNOLOGIES CO., LTD.: "Proposal of the generic RACS functional architecture" NGN PROJECT / WG2: DES/TISPAN-02020-NGN-R1, [Online] 17 September 2004 (2004-09-17), pages 1-5, XP002424685 Sophia Antipolis [retrieved on 2007-03-14]
- ITU WG3: "Revision 1 of TR-RACS, FGNGN-OD-00074" FOCUS GROUP ON NEXT GENERATION NETWORKS, 3 December 2004 (2004-12-03), pages 1-22, XP002424686 [retrieved on 2007-03-14]
- "NGN Functional Architecture" ETSI STANDARDS, EUROPEAN TELECOMMUNICATIONS STANDARDS INSTITUTE, SOPHIA-ANTIPO, FR, no. V 10, June 2004 (2004-06), XP014028491 ISSN: 0000-0001
- "NGN Functional Architecture" ETSI STANDARDS, EUROPEAN TELECOMMUNICATIONS STANDARDS INSTITUTE, SOPHIA-ANTIPO, FR, no. V 110, December 2004 (2004-12), XP014023277 ISSN: 0000-0001

## Description

### Field of the Invention

The present invention relates to Next Generation Network (NGN) technology, particularly to the functional framework, interface and control technique of a Resource and Admission Control Subsystem (RACS) in an NGN, and more particularly to a RACS and a method thereof in an NGN.

### Background of the Invention

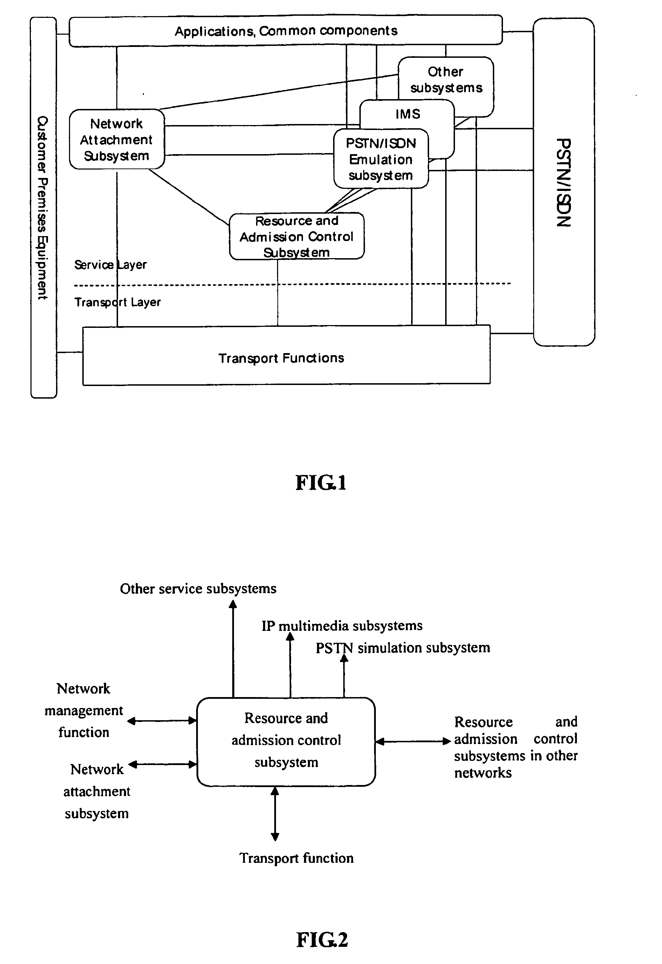

One of the characteristics of Next Generation Network (NGN) is that the service layer is separated from the transport layer, and the transport layer is implemented on the basis of packet switching technology and optical technology. At present, the Telecommunication and Internet converged Services and Protocols for Advanced Networking (TISPAN) workgroup of European Telecommunications Standards Institute (ETSI) has established a functional framework of NGN that supports combination of fixed communication and mobile communication on the basis of IP Multimedia Subsystem (3G IMS) for the third generation mobile communication. As shown in FIG.1, the framework includes a service layer and an IP-based transport layer.

The service layer includes a Network Attachment Subsystem (NASS), a Resource and Admission Control Subsystem (RACS), an IP Multimedia Subsystem (IMS), a PSTN/ISDN Emulation Subsystem (PES), other multimedia subsystems and applications, and common service components of these subsystems (such as application server, home mobile subscriber server, charging function, secure gateway, signaling gateway function, intercommunication function, and interconnect border control function, etc.

Under the control of NASS and RACS, the transport layer provides IP connectivity between NGN terminals, hides the transport technologies used on the layers under IP layer of access network and core network, and implements separation and interaction between the service layer and the transport layer. These subsystems can be distributed in the administrative domain of the network/service provider.

On the transport layer, only the Media Gateway Function (MGF) and the Border Gateway Function (BGF) may be possible to interact with the service layer. The BGF provides an interface between two IP transport domains, and may be located at the border of the customer premise network, of the access network or of the core network. The BGF terminates and interconnects L1 and L2 protocols at the interface between the two sides, and can provide the following functions: 1) gate opening and closing (the so-called "gate" refers to packet filtering in accordance with IP address/port); 2) packet marking for outbound traffic; 3) bandwidth reservation and allocation for inbound and outbound traffic; 4) IP address and port translation; 5) policing of inbound traffic; 6) packet filtering-based firewall; 7) measurement of usage. In order to control above functions as required by the service, the BGF may interact with the entities on the service layer. A residential BGF (R-BGF) is located at the border of the customer premise network; an access BGF (A-BGF) is located at the border of the access network; and an interconnect BGF (I-BGF) is located at the border of the core network.

The RACS is a critical component that supports end-to-end QoS control in an NGN environment; its position and external interface relationship in the overall NGN framework is shown in FIG.2. The RACS must have interfaces to the transport layer, Network Management Function (NMF), NAS, IMS, PES, other service subsystems, and RACSs in other networks.

The RACS provides admission control and gate control functions (including network address port translation control and DSCP marking, etc.). The admission control covers checking authorization, operator-specific policy rules, and transport resource availability on the basis of the user profile stored in the NAS of access network. Transport resource availability check means the admission control function verifies whether the requested bandwidth matches the subscribed bandwidth and the used bandwidth of each subscriber.

FIG.2 shows the position of RACS in the overall framework of NGN and its external interface relationship. Due to the diversity and multimedia feature of NGN services, it is a necessary task to investigate how the IP-based transport layer can provide end-to-end QoS better than Best Effort transport service and comparable to the PSTN in the NGN research work. Since the RACS is a crucial subsystem for supporting end-to-end control in the NGN framework, it is required to investigate the external interface and internal functional framework of RACS.

Technical solution of prior art 1:

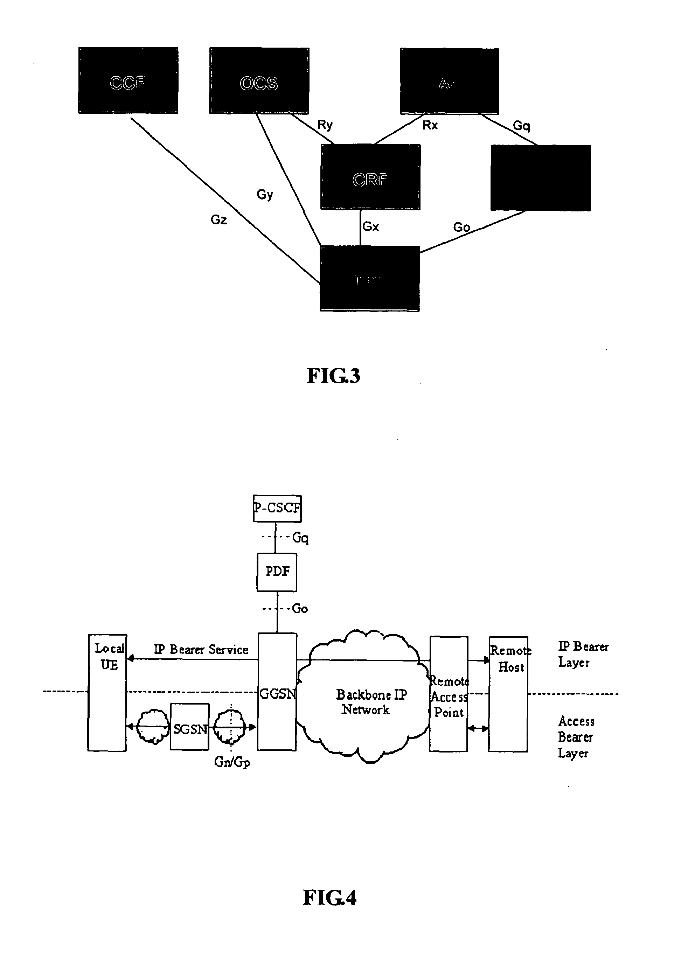

A Policy Decision Function (PDF) is specified in TS 23.207 of 3GPP R6, in order to support end-to-end QoS control in UMTS domain, as shown in FIG.3. The PDF is connected to the application function (AF) via a Gq interface, and connected to the Traffic Plane Function (TPF) via a Go interface. In addition, flow-based charging in the Charging Rules Function (CRF) is considered in TS.23.125; the CRF is connected to AF via a Rx interface and connected to TPF via a Gx interface.

The control point of the Go interface for TPF is on the gateway at the border of the core network, i.e., GGSN; a charging control function; an Application Function (AF), which requires application function of IP bearer resource control (e.g., P-CSCF in IMS); a Charging Collection Function (CCF); an Online Charging System (OCS); and a Policy Decision Function (PDF), as shown in FIG.3.

For 3GPP IP multimedia service, the end-to-end QoS framework is shown in FIG.4. In the IP backbone network, QoS is assured by means of Diffserv mechanism and high bandwidth; in the UMTS access network (i.e., from UE to GGSN), the QoS of IP bearer services is assured by means of PDP context. The PDF interacts with AF and GGSN and performs admission control on the basis of the subscriber service agreement and management policy, so as to control DiffServ forwarding at GGSN. The PDF follows the policy control framework established by IETF RAP Group.

QoS control is accomplished in three segments: the local UMTS access network, the IP backbone network, and the remote subscriber access network.

In order to implement end-to-end QoS, the QoS control mechanisms in the local UMTS access network, the IP backbone network, and the remote subscriber access network can interact with each other in the following approaches: (1) messaging along the data flow path (e.g., RSVP and LDP); (2) intercommunication between policy control or resource management units; (3) service level agreement execution at border routers in the networks.

Therefore, the end-to-end QoS framework in 3GPP TS 23.207 mainly specifies the QoS control mechanism and PDF in UMTS domain, but it specifies neither the QoS control framework and mechanism in the backbone network nor the end-to-end QoS framework and mechanism for intercommunication with the UMTS external network.

Disadvantages of prior art 1:

The Policy Decision Function (PDF) performs admission control and gate control merely on the basis of subscriber service agreement and management policy but doesn't check availability of network resources (including competition for shared resources) on the basis of resource status; therefore, it can't solve the QoS problem resulted from resources competition and overload on IP bearer layer at the border between the UMTS access network and the core network.

The IP core network relies on DiffServ mechanism and high bandwidth but doesn't define a resource control function framework; therefore, it can't provide QoS assurance required for real-time services.

End-to-end QoS assurance is unavailable because there is no end-to-end QoS framework and mechanism for intercommunication with the UMTS external network.

Technical solution of prior art 2:

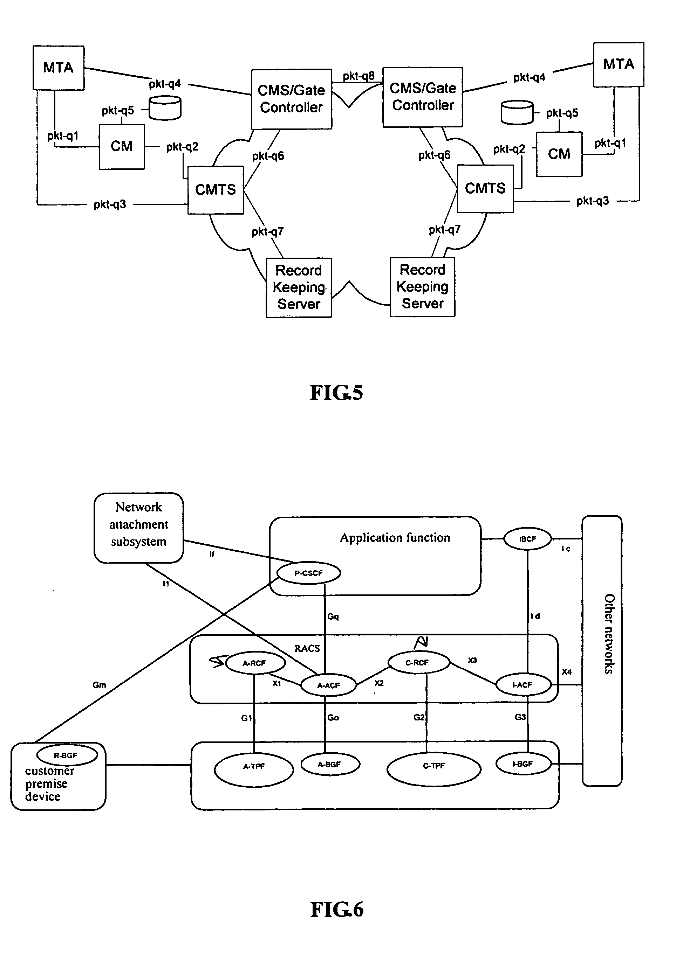

ITU-T J.163 describes a dynamic QoS model in a Cable IP access network (IPCablecom), as shown in FIG.5. The Call Management Server (CMS) controls multimedia session setup and maintains status of each call. The Gate Controller (GC), as a part of CMS, performs QoS functional part, performs QoS admission control, and controls gate operation in the Cable Modem Termination System (CMTS) via a pkt-q6 interface. The GC provides policy decision point function, following the policy control framework specified by the IETF RAP Group.

QoS management is divided into three segments: a Cable IP access network at start side, an IP backbone network, and a Cable access network at terminal side.

QoS in the Cable IP access network is controlled with the QoS parameters carrying traffic and flow specifications as specified in J.112. The QoS objects carried in these parameters are similar to TSPEC and RSPEC objects carried in RSVP, so as to support dynamic flow-based QoS resource reservation. The flows may be unidirectional or bidirectional.

In the IP core network, Diffserv mechanism is used to ensure QoS. RSVP can be used to transmit multimedia service QoS requests in an end-to-end manner.

CMSs implement session control and resource coordination with each other via a pkt-q8 interface. The resource management in the backbone network may be per-flow or aggregated, which is not specified in J.163.

Gate is a construction that defines QoS operations in CMTS and is a control point that controls whether the access network can be connected to a high quality backbone service network. A Gate includes a packet classifier, a traffic policer, and an interface for acquisition of statistical information. Gate control can ensure only sessions authorized by the service provider are served at a high quality. Gate control operations are applied to each call data flow, to open or close the gate. When a gate is to be opened, the GC has to perform admission control check in accordance with a resource management request from the client; and if necessary, resources for the session in the network may be reserved.

Disadvantages of prior art 2:

The Gate Controller (GC) is integrated in CMTS; therefore, the GC requires high upgrade costs to provide new multimedia services and can't support the QoS requirements of any other traffic control entity.

The Gate Controller (GC) performs admission control and gate control merely on the basis of subscriber service agreement and management policy but doesn't check availability of network resources (including competition for shared resources) on the basis of resource status. Therefore, it can't solve the QoS problem resulted from resources competition and overload on IP bearer layer at the border between the Cable access network and the core network.

The IP core network relies on DiffServ mechanism and high bandwidth but doesn't specify a resource control function framework, and thus can't provide QoS assurance required for real-time services.

End-to-end QoS assurance is unavailable because no end-to-end QoS framework and mechanism for intercommunication with the Cable external network is specified.

The document "NGN Functional Architecture", ETSI STANDARDS, EUROPEAN TELECOMMUNICATIONS STANDARDS INSTITUTE, SOPHIA-ANTIPO, FR, no. V 10, June 2004(2004-06), XP014028491 describes the functional architecture for the Resource and Admission Control Sub-System (RACS), in TISPAN NGN Release 1, as defined in [DTR/TISPAN-01016-NG].

### Summary of the Invention

An object of the present invention aims to provide a Resource Admission and Control Subsystem (RACS) in an NGN and a method thereof. Based on the RACS functional framework as provided, a method for authentication and admission control decision making is provided for resource reservation requests by RACS, i.e., a method for end-to-end QoS control by RACS at media flow level. As a logically independent subsystem, RACS can support transport QoS requirements of multiple service subsystems (including IP multimedia service subsystem and PSTN/ISDN service emulation subsystem) simultaneously, implement QoS control for interconnecting links between different administrative domains, balance network load, prevent congestion (especially at bottle necks of network resources), support necessary measurement and protection mechanisms on the transport layer, and solve the problem of competition for transport resources among NGN traffics in the network administrative domains.

The technical solution according to an aspect of the present invention is as follows:

A resource and admission control subsystem in an NGN, including: a Resource Control Function in access network (A-RCF), an Access Admission Control Function (A-ACF), a Resource Control Function in core network (C-RCF), an Interconnection Admission Control Function (I-ACF), and

a Gq interface: the application service control function in each NGN application service subsystem interacts with the A-ACF via the Gq interface, to send the resource reservation request of the application service media flow for the transport layer to the A-ACF;

a Go interface: the A-ACF controls an Access Border Gateway Function (A-BGF) via the Go interface;

a G3 interface: the I-ACF controls an Interconnection Border Gateway Function (I-BGF) via the G3 interface;

a G2 interface: the C-RCF acquires transport resource status information in the core network via the G2 interface, and controls a Traffic Plane Function in core network (C-TPF);

a G1 interface: the A-RCF acquires transport resource status information in the access network, and controls a Traffic Plane Function in the access network (A-TPF) via the G1 interface;

X1 and X2 interfaces: the A-ACF interacts and coordinates with the A-RCF via the X1 interface and with the C-RCF via the X2 interface, to implement end-to-end transport resource availability checking and QoS control for application service media flows in the operator network.

X3 and X4 interfaces: the I-ACF interacts with the C-RCF via the X3 interface, to implement end-to-end transport resource availability checking and QoS control for application service media flows across operator networks; the I-ACF interacts with RACSs in other operator networks via the X4 interface, to forward resource reservation requests of application service media flows across operator networks;

an I1 interface: the A-ACF interacts with a Network Attachment Subsystem (NASS) via the I1 interface, to obtain user profiles;

an Id interface: an Interconnection Border Control Function (IBCF) interacts with the I-ACF via the Id interface, to send the resource reservation request of cross-operator application service media flow for the transport layer to the I-ACF.

The A-BGF receives admission control parameters from the Go interface and performs such functions as gate operations, packet marking, bandwidth allocation, network address and port translation, traffic policing for the application service media flow in accordance with the admission control parameters;

the I-BGF receives admission control parameters from the G3 interface and performs such functions as gate operations, packet marking, bandwidth allocation, network address and port translation, and traffic policing for the cross-operator application service media flow in accordance with the admission control parameters;

the C-RCF acquires transport resource status information (e.g., topology and bandwidth, etc.) in the core network via the G2 interface, and controls QoS route and resource reservation in the C-TPF;

the A-RCF acquires transport resource status information (e.g., topology and bandwidth, etc.) in the access network via the G1 interface, and controls QoS route and resource reservation in the A-TPF.

After receiving a resource reservation request via the Gq interface, the A-ACF performs authentication to check whether the resource reservation request conforms to operation policy rules, obtains user profiles related with the service via the I1 interface, and checks whether the resource reservation request conforms to the user profiles;

if a Resource Control Function in access network (A-RCF) is provided, the A-ACF forwards the resource reservation request to the A-RCF via an X1 interface to check the transport resource availability in the access network (i.e., to check whether there are enough transport resources available in the access network to meet the resource reservation request), and obtains the check result of transport resource availability in the access network from the A-RCF; the check result carrying QoS class, bandwidth and ingress path information assigned to the application service media flow;

if the application service media flow is towards the core network and a Resource Control Function in core network (C-RCF) is provided, the A-ACF forwards the resource reservation request to the C-RCF via an X2 interface to check the transport resource availability in the core network (i.e., to check whether there are enough transport resources available in the core network to meet the resource reservation request), and obtains the check result of transport resource availability in the core network from the C-RCF; wherein the check result may carry such information as QoS class, bandwidth and ingress path information assigned to the application service media flow.

After receiving a resource reservation request via the Id interface, the I-ACF checks whether the resource reservation request conforms to Service Level Agreements (SLA), the operation policy rules, and transport resource availability of interconnecting links between operators (i.e., to check whether each interconnecting link has enough transport resources available to meet the resource reservation request);

if the application service media flow is towards the core network and a C-RCF is provided in the core network, the I-ACF forwards the resource reservation request via the X3 interface to the C-RCF, so as to check the transport resource availability in the core network (i.e., to check whether there are enough transport resources available in the core network to meet the resource reservation request), and obtains the check result of transport resource availability in the core network from the C-RCF; wherein, the check result may carry such information as QoS class, bandwidth and ingress path information assigned to the application service media flow.

After receiving a resource reservation request, the A-ACF makes an admission control decision (i.e., whether to permit the application service media flow to enter into the network and whether the QoS requirement parameters specified in the resource reservation request are met) and determines the admission control parameters for the application service media flow (including such information as gate control, bandwidth allocation, QoS class, and ingress path), in accordance with the check result of user profiles, the check result of operation policy rules, and the check result of transport resource availability;

the A-ACF returns the authentication and admission control decision result for the resource reservation request to the application service control function via the Gq interface;

if the admission control decision result is "permit", the A-ACF sends the admission control parameters to the A-BGF actively, or the A-BGF requests for the admission control parameters from the A-ACF via the Go interface; the A-BGF performs such functions as gate operations, bandwidth allocation, packet marking, and traffic policing for the application service media flow in accordance with the admission control parameters.

After receiving a resource reservation request, the I-ACF makes an admission control decision (i.e., whether permits the media flow of the cross-operator application service to enter into the network and whether the QoS requirement parameters specified in the resource reservation request are met) and determines the admission control parameters (including gate control, bandwidth allocation, QoS class, and ingress route information) for the media flow of the cross-operator application service, in accordance with the check result of SLA, the check result of operation policy rules, and the check result of transport resource availability between operators;

the I-ACF returns the authentication and admission control decision results for the resource reservation request to the IBCF via the Id interface;

if the admission control decision result is "permit", the I-ACF sends the admission control parameters to the I-BGF actively, or the I-BGF requests for the admission control parameters from the I-ACF via the G3 interface; the I-BGF performs gate operations, bandwidth allocation, packet marking, and traffic policing for the application service media flow in accordance with the admission control parameters.

Another aspect of the present invention provides a method for resource and admission control in an NGN, wherein an Access Admission Control Function (A-ACF) performs authentication and makes an admission control decision for a resource reservation request in accordance with user profiles (stored in NASS), operation policy rules, and transport resource availability, and controls an Access Border Gateway Function (A-BGF) at the border between the access network and the core network via a Go interface in accordance with the admission control decision result;

an Interconnection Admission Control Function (I-ACF) performs authentication and makes an admission control decision in accordance with Service Level Agreements (SLA), operation policy rules, and transport resource availability between operators, and controls an Interconnection Border Gateway Function (I-BGF) at the border of core networks via a G3 interface in accordance with the admission control decision result;

a Resource Control Function in access network (A-RCF) acquires status information of transport resources in the access network via a G1 interface, controls resource reservation in the network, maintains a database of transport resource availability and resource allocation status data, checks the transport resource availability in accordance with the request from the A-ACF, performs checking and resource allocation on the basis of the resource status database, updates resource allocation status, and returns the check result of transport resource availability;

a Resource Control Function in core network (C-RCF) acquires status information of transport resources in the core network via a G2 interface, controls resource reservation in the network, maintains a database of transport resource availability and resource allocation status, checks the transport resource availability in accordance with the request from the A-ACF or the I-ACF, performs checking and resource allocation on the basis of the resource status database, updates resource allocation status and returns the check result of transport resource availability.

The A-ACF controls the A-BGF at the border of the access network via a Go interface to perform the following steps for the media flow in accordance with the admission control decision result: 1. gate opening or closing ("gate" indicates packet filtering by IP address/port); 2. packet marking for outbound traffic; 3. bandwidth reservation and allocation for inbound/outbound traffic; 4. IP address and port translation; 5. policing of inbound traffic; 6. packet filtering-based firewall; 7. measurement of usage.

The I-ACF controls the I-BGF at the border of the core network via the G3 interface to perform the following steps in accordance with the admission control decision result: 1. gate operations; 2. packet marking; 3. resource reservation; 4. network address and port translation; 5. traffic policing.

The status information of transport resources in the network includes: network topology, physical or logical link bandwidth, etc.

In each network administrative domain, a centralized RCF or multiple RCFs distributed in sub-domains can be provided in accordance with the network scale and packet bearing technique, and backup RCFs can be provided to improve reliability.

If multiple RCFs distributed in the sub-domains are provided in an administrative domain, the RCFs can interact and coordinate with each other via a universal and extensible protocol interface, so as to accomplish the checking of end-to-end transport resource availability for the resource reservation requests across the entire administrative domain.

RCFs in different network administrative domains are usually interconnected via an ACF. Transport resource availability check requests and results are sent between ACFs and RCFs via a universal and extensible protocol interface.

If there is a trusting relationship between different network administrative domains, RCFs in the different network administrative domains can interface to each other directly and exchange information with each other, just like in a single administrative domain.

Both ACF and RCF are logical functions, which can be separate physical devices or functional modules integrated in other physical devices.

For application service in an operator network, a Resource and Admission Control Subsystem (RACS) performs end-to-end QoS control via the steps of:

during the process of creating the application service, the application service control function determines the resource reservation requirements of the application service media flow and sends a resource reservation request containing the requirements to the A-ACF at initiating end and destination end via the Gq interface, respectively;

when receiving the resource reservation request, the A-ACF performs authentication and makes an admission control decision for the resource reservation request;

the A-ACF returns the authentication and admission control decision result for the resource reservation request to the application service control function via the Gq interface;

if the admission control decision is "permit", the A-ACF sends admission control parameters to the A-BGF in push or pull mode via the Go interface, to control gate operations, packet marking, and traffic policing at the A-BGF.

For an application service across operator networks, the RACS performs end-to-end QoS control via the steps of:

during the process of creating the application service, the application service control function determines the resource reservation requirements of the application service media flow and sends a resource reservation request containing the requirements to the A-ACF via the Gq interface; an Interconnection Border Control Function (IBCF) determines the resource requirements of application service media flow and sends a resource reservation request containing the requirements to the I-ACF via an Id interface;

when receiving the resource reservation request, the A-ACF performs authentication and makes an admission control decision for the resource reservation request;

when receiving the resource reservation request, the I-ACF performs authentication and makes an admission control decision for the resource reservation request;

the A-ACF returns the authentication and admission control decision result for the resource reservation request to the application service control function via the Gq interface;

the I-ACF returns the authentication and admission control decision result for the resource reservation request to the IBCF via the Id interface;

if the admission control decision is "permit", the A-ACF sends admission control parameters to the A-BGF in push or pull mode via the Go interface, to control gate operations, packet marking, and traffic policing at the A-BGF;

if the admission control decision is "permit", the I-ACF sends admission control parameters to the I-BGF in push or pull mode via the G3 interface, to control gate operations, packet marking, and traffic policing at the I-BGF.
Another aspect of the present invention provides a resource and admission control subsystem in a next generation network, including:
an Access Admission Control Function (A-ACF), which is adapted to receive a resource reservation request from an application service media flow, perform authentication and make admission control decision for the resource reservation request based on user profile, operation policy rules, and transport resource availability, and control an Access Border Gateway Function (A-BGF) between an access network and a core network in accordance with the admission control decision result;
an Interconnection Admission Control Function (I-ACF), which is adapted to receive a resource reservation request from a cross-operator application service media flow, perform authentication and make admission control decision for the resource reservation request based on user profile, operation policy rules, and transport resource availability, and control an Interconnection Border Gateway Function (I-BGF) between the core networks in accordance with the admission control decision result;
a Gq interface;
a Go interface;
an Id interface; and
a G3 interface;
wherein an application service control function in each NGN application service subsystem interacts with the A-ACF via the Gq interface, to send the resource reservation requirements of the application service media flow to the A-ACF through the resource reservation request;
the A-ACF controls the A-BGF via the Go interface;
an interconnection border control function (IBCF) sends the resource reservation requirements of the cross-operator application service media flow to the I-ACF through the resource reservation request via the Id interface;
the I-ACF controls the I-BGF via the G3 interface.

The method for resource and admission control according to an aspect of the present invention enables modification of resource reservation in the application service session. The application service control function sends a resource reservation modification request to the A-ACF via the Gq interface; if it is a cross-operator application service, the IBCF sends the resource reservation modification request to the I-ACF via the Id interface; the A-ACF and I-ACF modify the original resource reservation and admission control parameters.

The method for resource and admission control according to an embodiment of the present invention requires that the resource reservation should be released after the application service is completed. The application service control function sends a resource release request to the A-ACF via the Gq interface; if it is a cross-operator application service, the IBCF sends the resource release request to the I-ACF via the Id interface; the A-ACF and I-ACF release all resource reservation and admission control parameters.

It is seen from above technical solution according to an embodiment of the present invention: the functional framework and method for resource and admission control according to an embodiment of the present invention supports end-to-end QoS control at media flow level and has no limitation on the packet switching technique used on the transport layer in the access network and the core network. The functions intercommunicate with each other via a universal and extensible protocol interface, independent of the configuration and deployment of physical devices.

### Brief Description of the Drawings

FIG. 1 shows an overall framework of TISPAN NGN;

FIG.2 shows a position of RACS in the NGN framework and the external interface relationship of RACS;

FIG.3 shows interfacing between PDF and other functions;

FIG.4 shows a PDF-based end-to-end QoS framework in 3GPP IMS;

FIG.5 shows a dynamic QoS model in IPCablecom;

FIG.6 shows a functional framework and interfaces of RACS according to an embodiment of the present invention.

### Detailed Description of the Embodiments

Hereinafter the embodiments of the present invention are described with reference to the attached drawings. As a logically independent subsystem, the RACS can support transport QoS requirements of multiple service subsystems (including IP multimedia service subsystem and PSTN/ISDN service emulation subsystem) simultaneously. An embodiment of the present invention provides a functional framework and internal and external interfaces of the Resource Admission and Control Subsystem (RACS), a method for authentication and admission control decision making for resource reservation request by RACS, and a method for end-to-end QoS control by RACS at media flow level.

On the basis of the Access Admission Control Function (A-ACF) at the edge of operator network, an embodiment of the present invention has introduced an Interconnection Admission Control Function (I-ACF) at the network border, in order to implement QoS control for the interconnecting links between different network administrative domains. The ACF can have network address translation and port translation (NAPT) function.

In order to solve the problem of competition for transport resources between NGN traffics in the network administrative domains, an embodiment of the present invention has introduced a resource control function (CF) for network resource availability checking, QoS routing and resource reservation, so as to balance network load and prevent congestion (especially at bottle necks of network resources) and support necessary measurement and protection mechanisms on the transport layer.

In an embodiment of the present invention, the Admission Control Function (ACF) and the Resource Control Function (RCF) have no limitation on the packet switching technique used on the transport layer in the access network and the core network.

The RACS functional framework according to an embodiment of the present invention is shown in FIG.6, and it defines the internal interfaces between the functions and the external interfaces to external components, wherein:
R-BGF - Residential Border Gateway Function;
NASS - Network Attachment SubSystem;
P-CSCF - Proxy Call Session Control Function;
IBCF - Interconnection Border Control Function;
A-ACF - Access ACF;
I-ACF - Interconnection ACF;
A-RCF - RCF in access network;
C-RCF - RCF in core network;
A-BGF - Access BGF;
I-BGF - Interconnection BGF;
A-TPF - TPF in access network;
C-TPF - TPF in core network;

The RACS shown in FIG.6 includes Admission Control Functions (ACFs) and Resource Control Functions (RCFs).

The Admission Control Functions (ACFs) are distributed at the edge of the operator network and the border between operator networks. Wherein, the Access Admission Control Function (A-ACF) performs authentication and makes admission control decisions for resource reservation requests of application service media flows, based on user profile (stored in NASS), operation policy rules and transport resource availability, and controls the A-BGF at the border between the access network and the core network via a Go interface to perform the following operations in accordance with the admission control decision result: 1) gate opening or closing ("gate" indicates packet filtering by IP address/port); 2) packet marking for outbound traffic; 3) bandwidth reservation and allocation for inbound and outbound traffic; 4) IP address and port translation; 5) policing of inbound traffic; 6) packet filtering-based firewall; 7) measurement of usage.

[0100] The Interconnection Admission Control Function (I-ACF) performs authentication and makes admission control decisions for resource reservation requests of media flows of cross-operator application services in accordance with the SLA between operators, operation policy rules, and transport resource availability, and controls the I-BGF at the border of the core network via a G3 interface, in accordance with the admission control decision result, to perform gate operations, packet marking, resource reservation, network address and port translation, and traffic policing, etc.

The Resource Control Functions (RCFs) are distributed in the network administrative domains, such as domains in the access network and domains in the core network.

Wherein, the RCF in access network (A-RCF) acquires status information (such as topology and bandwidth, etc) of transport resources (i.e., A-TPF) in the access network via a G1 interface, controls QoS-related traffic handling and resource reservation activities of A-TPF in the network, maintains a database of transport resource availability and resource allocation status, checks the transport resource availability in accordance with the request from the A-ACF, performs checking and resource allocation on the basis of the resource status database, updates resource allocation status and returns the check result of transport resource availability.

The RCF in core network (C-RCF) acquires status information of transport resources (such as topology and bandwidth, etc) in the core network (i.e., C-TPF) via a G2 interface, controls QoS-related traffic handling and resource reservation activities of C-TPF in the network, maintains a database of transport resource availability and resource allocation status, checks the transport resource availability in accordance with the request from the A-ACF or I-ACF, performs checking and resource allocation on the basis of the resource status database, updates resource allocation status and returns the check result of transport resource availability.

In each network administrative domain, a centralized RCF or multiple RCFs distributed in the sub-domains can be provided in accordance with the network scale and packet bearing technique, and backup RCFs can be provided to improve reliability. Since the transport technology and data plane QoS mechanism in each network administrative domain may be different from others, RCF may be implemented in different ways accordingly, for example, RCF in IP network, RCF in MPLS network, RCF in Ethernet, and RCF in GMPLS network.

If multiple RCFs distributed in the sub-domains are provided in a network administrative domain, the RCFs can interact and coordinate with each other via a universal and extensible protocol interface, so as to accomplish the checking of end-to-end transport resource availability for resource reservation requests across the entire administrative domain.

Two RCFs in different network administrative domains are usually interconnected via an ACF. Transport resource availability check requests and results are sent between ACFs and RCFs via a universal and extensible protocol interface. If there is a trusting relationship between different network administrative domains, RCFs in the different network administrative domains can interface to each other directly and exchange information with each other, just like in a single administrative domain.

Both ACF and RCF are logical functions, whose physical implementation is not limited (e.g., they may be separate physical devices or functional modules integrated in other physical devices). As for compatibility, the PDF in 3GPP IMS and the GC in IPCableCom can be regarded as different implementing examples of A-ACF in different types of access networks; the Bandwidth Broker (BB) in Internet 2/MSF can be regarded as an implementing example of C-RCF in IP network.

Gq interface: in NGN application service subsystems, for resource control on the transport layer, an application service control function (e.g., P-CSCF in IP multimedia subsystem) is required to send resource reservation requirements of application service media flows for the transport layer initiated from the operator network to the A-ACF in RACS via a Gq interface. The interface can be identical or compatible to the Gq interface specified in 3GPP R6 IMS.

Go interface: the A-ACF controls the A-BGF via a Go interface to perform gate operations, packet marking, resource reservation, network address and port translation, and traffic policing, etc. This interface can be identical or compatible to the Go interface specified in 3GPP R6 IMS.

G3 interface: the I-ACF controls the I-BGF via a G3 interface to perform gate operations, packet marking, resource reservation, network address and port translation, and traffic policing, etc. The G3 interface is a new interface specified in an embodiment of the present invention.

G2 interface: the C-RCF acquires information such as topology and bandwidth of transport resources in the core network and controls QoS-related traffic handling and resource reservation activities of the C-TPF via a G2 interface. The G2 interface is a new interface specified in an embodiment of the present invention.

G1 interface: the A-RCF acquires information such as topology and bandwidth of transport resources in the core network and controls QoS-related traffic handling and resource reservation activities of the A-TPF via a G1 interface. The G1 interface is a new interface specified in an embodiment of the present invention.

X1 and X2 interfaces: the Access ACF (A-ACF) interacts and coordinates with the RCF in access network (A-RCF) via an X1 interface, and interacts and coordinates with the RCF in core network (C-RCF) via an X2 interface, to perform end-to-end transport resource availability checking and QoS control for resource reservation requirements of application service media flows in the operator network, and provide absolute or relative QoS for various NGN services in response to resource reservation requirements of the application service media flows. The X1 and X2 interfaces are new interfaces specified in an embodiment of the present invention.

X3 and X4 interfaces: the Interconnection ACF (I-ACF) interacts with C-RCF via an X3 interface, to perform end-to-end transport resource availability checking and QoS control for resource reservation requirements of application service media flows across operator networks, and provide absolute or relative QoS for various NGN services in response to application requests. The I-ACF may also interacts with a Resource and Admission Control Subsystem (RACS) in any other operator network via an X4 interface, to forward resource reservation requirements of applications across operator networks initiated in the current operator network. The X3 and X4 interfaces are new interfaces specified in an embodiment of the present invention.

I1 interface: the A-ACF interacts with the Network Attachment SubSystem (NASS) via an I1 interface, to obtain user profiles. If there is no local policy database in the A-ACF, the A-ACF can search for operation policy rules in a remote policy server. The I1 interface is a new interface specified in an embodiment of the present invention.

Id interface: the IBCF interacts with the I-ACF via an Id interface, to send resource reservation requirements of cross-operator application service media flows for the transport layer initiated from other operator networks to the I-ACF. This interface can be identical or compatible to the Id interface specified in 3GPP R6 IMS.

The A-ACF performs authentication and makes admission control decisions for resource reservation requests of application service media flows with the following method:

after receiving a resource reservation request from the Gq interface, the A-ACF interacts with the NASS via the I1 interface to obtain user profiles, to check whether the resource reservation request conforms to the user profiles; if there is no local policy database in the A-ACF, the A-ACF can search for operation policy rules in a remote policy server and check whether the resource reservation request conforms to the operation policy rules;

if an A-RCF in the access network is provided, the A-ACF forwards the resource reservation request via the X1 interface to the A-RCF, to check the transport resource availability in the access network (i.e., whether there are enough transport resources available in the access network to meet the resource reservation request), and obtains the check result of transport resource availability in the access network from the A-RCF; wherein, the check result may carry information such as QoS class, bandwidth and ingress path assigned to the application service media flow;

if the application service media flow is towards the core network and a C-RCF is provided in the core network, the A-ACF forwards the resource reservation request via the X2 interface to the C-RCF, to check the transport resource availability in the core network (i.e., whether there are enough transport resources available in the core network to meet the resource reservation request), and obtains the check result of transport resource availability in the core network from the C-RCF; wherein, the check result may carry information such as QoS class, bandwidth and ingress path assigned to the application service media flow.

The I-ACF performs authentication and makes admission control decisions for resource reservation requests of cross-operator application service media flows with the following method:

after receiving a resource reservation request via the Id interface, the I-ACF checks whether the resource reservation request conforms to SLA, operation policy rules, and transport resource availability of the interconnecting link (i.e., checks whether the interconnecting link has enough transport resources available to meet the resource reservation request) between operators;

if the application service media flow is towards the core network and there is a C-RCF in the core network, 1-ACF forwards the resource reservation request via the X3 interface to C-RCF, to check the transport resource availability in the core network, and obtains the check result of transport resource availability in the core network from C-RCF; wherein, the check result may carry information such as QoS class, bandwidth and ingress path assigned to the application service media flow.

For any application service in an operator network, RACS performs end-to-end QoS control with the following method:

during the process of creating the application service, the application service control function determines the resource reservation requirements of the application service media flow and sends a resource reservation request containing the requirements to the A-ACFs at initiating end and destination end via the Gq interface respectively;

when receiving the resource reservation request, the A-ACF performs authentication and makes an admission control decision for the resource reservation request;

the A-ACF returns the authentication and admission control decision result for the resource reservation request to the application service control function via the Gq interface;

if the admission control decision result is "permit", the A-ACF sends the admission control parameters to A-BGF in push or pull mode via the Go interface, to control gate operations, packet marking, traffic policing, etc at A-BGF.

For any application service across operator networks, the RACS performs end-to-end QoS control with the following method:

during the process of creating the application service, the application service control function determines the resource reservation requirements of the application service media flow and sends a resource reservation request containing the requirements to the A-ACF via the Gq interface; the IBCF determines the resource requirements of application service media flow and sends a resource reservation request containing the requirements to the I-ACF via the Id interface;

when receiving the resource reservation request, the A-ACF performs authentication and makes an admission control decision for the resource reservation request;

when receiving the resource reservation request, the I-ACF performs authentication and makes an admission control decision for the resource reservation request;

the A-ACF returns the authentication and admission control decision result for the resource reservation request to the application service control function via the Gq interface;

the I-ACF returns the authentication and admission control decision result for the resource reservation request to the IBCF via the Id interface;

if the admission control decision result is "permit", the A-ACF sends the admission control parameters to the A-BGF in push or pull mode via the Go interface, to control gate operations, packet marking, traffic mapping, etc at A-BGF;

if the admission control decision result is "permit", the I-ACF sends the admission control parameters to the I-BGF in push or pull mode via the G3 interface, to control gate operations, packet marking, traffic policing, etc at I-BGF.

The method for resource and admission control according to the embodiment of the present invention enables modification of resource reservation in the application service session. The application service control function sends a resource reservation modification request to the A-ACF via the Gq interface. If the application service is a service across operator networks, the IBCF sends the resource reservation modification request to the I-ACF via the Id interface; the A-ACF and I-ACF modify the original resource reservation and admission control parameters.

The method for resource and admission control according to the embodiment of the present invention requires that the resource reservation should be released after the application service is completed. The application service control function sends a resource release request to the A-ACF via the Gq interface. If the application service is a service cross operator networks, the IBCF sends the resource release request to the I-ACF via the Id interface; the A-ACF and I-ACF release the original resource reservation and admission control parameters.

Though the preferred embodiments of the present invention are described as above, the protective scope of the present invention shall not be limited to these embodiments. Any modifications or alternatives within the disclosure of the present invention by those skilled in the art shall fall in the protective scope of the present invention. Therefore, the protective scope of the present invention shall be defined by the claims.

## Claims

1. A resource and admission control subsystem in a next generation network, **characterized by** comprising:
an Access Admission Control Function hereinafter referred to as A-ACF, which is adapted to receive a resource reservation request from an application service media flow, perform authentication and make admission control decision for the resource reservation request based on user profile, operation policy rules, and transport resource availability, and control an Access Border Gateway Function hereinafter referred to as A-BGF between an access network and a core network in accordance with the admission control decision result;
an Interconnection Admission Control Function hereinafter referred to as I-ACF, which is adapted to receive a resource reservation request from a cross-operator application service media flow, perform authentication and make admission control decision for the resource reservation request based on user profile, operation policy rules, and transport resource availability, and control an Interconnection Border Gateway Function hereinafter referred to as I-BGF between the core networks in accordance with the admission control decision result;
a Gq interface;
a Go interface;
an Id interface; and
a G3 interface;
wherein an application service control function in each NGN application service subsystem interacts with the A-ACF via the Gq interface, to send the resource reservation requirements of the application service media flow to the A-ACF through the resource reservation request;
the A-ACF controls the A-BGF via the Go interface;
an interconnection border control function hereinafter referred to as IBCF sends the resource reservation requirements of the cross-operator application service media flow to the I-ACF through the resource reservation request via the Id interface;
the I-ACF controls the I-BGF via the G3 interface.

2. The resource and admission control subsystem in a next generation network according to claim 1, **characterized in that**:
the A-ACF is further adapted to receive the resource reservation request from the application service media flow for a transport layer of the network;
the I-ACF is further adapted to receive the resource reservation request from the cross-operator application service media flow for the transport layer of the network;
wherein the application service control function in each NGN application service subsystem interacts with the A-ACF via the Gq interface, to send the resource reservation requirements of the application service media flow for the transport layer to the A-ACF through the resource reservation request;
the A-ACF controls the A-BGF at the border between the access network and the core network via the Go interface, in accordance with the admission control decision result, to perform the functions of: gate opening or closing, the "gate" indicating packet filtering by IP address/port, packet marking for outbound traffic, bandwidth reservation and allocation for inbound/outbound traffic, IP address and port translation, policing of inbound traffic, packet filtering-based firewall, and measurement of usage, for the media flow;
the IBCF interacts with the I-ACF via the Id interface, to send the resource reservation requirements of the cross-operator application service media flow for the transport layer to the I-ACF through the resource reservation request;
the I-ACF controls the I-BGF at the border between the core networks via the G3 interface, in accordance with the admission control decision result, to perform the functions of gate opening or closing, packet marking for outbound traffic, bandwidth reservation and allocation for inbound/outbound traffic, IP address and port translation, policing of inbound traffic, packet filtering-based firewall, and measurement of usage, for the media flow.

3. The resource and admission control subsystem in a next generation network according to claim 2, further comprising:
a Resource Control Function in access network hereinafter referred to as A-RCF, which acquires status information including topology and bandwidth of transport resources in the access network, controls QoS-related traffic handling and resource reservation activities of a Traffic Plane Function in access network hereinafter referred to as A-TPF, maintains a database of transport resource availability and resource allocation status, checks the transport resource availability in accordance with the resource reservation request from the A-ACF, performs checking and resource allocation on the basis of the resource status database, updates the resource allocation status, and returns the check result of transport resource availability;
a Resource Control Function in core network hereinafter referred to as C-RCF, which acquires status information including topology and bandwidth of transport resources in the core network, controls QoS-related traffic handling and resource reservation activities of a Traffic Plane Function in core network hereinafter referred to as C-TPF, maintains a database of transport resource availability and resource allocation status, checks the transport resource availability in accordance with the resource reservation request from the A-ACF or I-ACF, performs checking and resource allocation on the basis of the resource status database, updates the resource allocation status, and returns the check result of transport resource availability;
a G2 interface;
a G1 interface;
an X1 interface; and
an X2 interface;
wherein the C-RCF acquires transport resource status information in the core network via the G2 interface, and controls QoS-related traffic handling and resource reservation activities of the C-TPF;
the A-RCF acquires transport resource status information in the access network via the G1 interface, and controls QoS-related traffic handling and resource reservation activities of the A-TPF;
the A-RCF interacts with the A-ACF via the X1 interface, to receive the transport resource availability check request from the A-ACF and return the check result of transport resource availability in the access network to the A-ACF; and
the C-RCF interacts with the A-ACF via the X2 interface, to receive the transport resource availability check request from the A-ACF and return the check result of transport resource availability in the core network to the A-ACF.

4. The resource and admission control subsystem in a next generation network according to claim 2 or 3, further comprising an X3 interface, wherein the C-RCF interacts with the I-ACF via the X3 interface, to receive the transport resource availability check request from the I-ACF and return the check result of transport resource availability in the access network to the I-ACF.

5. The resource and admission control subsystem in a next generation network according to claim 2, further comprising an X4 interface, wherein the I-ACF interacts with a Resource and Admission Control Subsystem hereinafter referred to as RACS in any other operator network via the X4 interface, to forward the resource reservation request of cross-operator application service media flows.

6. The resource and admission control subsystem in a next generation network according to claim 2, further comprising an I1 interface, wherein the A-ACF interacts with a Network Attachment Subsystem hereinafter referred to as NASS via the I1 interface, to obtain user profiles.

7. The resource and admission control subsystem in a next generation network according to claim 2 or 3, wherein
both ACF and RCF are logical functional entities, which are separate physical devices or functional modules integrated in other physical devices.

8. The resource and admission control subsystem in a next generation network according to claim 2 or 3, wherein
in each network administrative domain, a centralized RCF or a plurality of RCFs distributed in sub-domains are provided in accordance with the network scale and the type of transport technology;
if a plurality of RCFs distributed in the sub-domains are provided in one administrative domain, the RCFs can interact and coordinate with each other via a universal and extensible protocol interface, so as to accomplish checking of edge-to-edge transport resource availability for the resource reservation request across the entire administrative domain.

9. The resource and admission control subsystem in a next generation network according to claim 2 or 3, wherein
RCFs in different network administrative domains are interconnected via ACFs; if there is a trusting relationship between the different network administrative domains, the RCFs in the different network administrative domains interface to each other, and exchange information with each other.

10. A method for resource and admission control in a next generation network, **characterized by** comprising the steps of:
after receiving a resource reservation request from a Gq interface, performing authentication by an Access Admission Control Function hereinafter referred to as A-ACF, to check whether the resource reservation request conforms to operation policy rules and whether the resource reservation request conforms to user profiles;
if a Resource Control Function in access network hereinafter referred to as A-RCF is provided, forwarding the resource reservation request from the A-ACF to the A-RCF via an X1 interface to check the transport resource availability in the access network, and obtaining the check result of transport resource availability in the access network from the A-RCF; the check result carrying QoS class, bandwidth and ingress path information assigned to an application service media flow;
if the application service media flow is towards a core network and a Resource Control Function in core network hereinafter referred to as C-RCF is provided, forwarding the resource reservation request from the A-ACF to the C-RCF via an X2 interface to check the transport resource availability in the core network, and obtaining the check result of transport resource availability in the core network from the C-RCF; the check result carrying QoS class, bandwidth and ingress path information assigned to the application service media flow;
making an admission control decision by the A-ACF in accordance with the check result of operation policy rules, the check result of user profiles, and the check result of transport resource availability, and determining admission control parameters for the application service media flow; the control parameter including gate control, bandwidth allocation, QoS marking, and ingress path information;
returning the authentication and admission control decision result for the resource reservation request from the A-ACF to an application service control function via a Gq interface;
if the admission control decision result is "permit", sending the admission control parameters from the A-ACF to an Access Border Gateway Function (A-BGF) in push or pull mode via a Go interface, to control gate operations, packet marking, and traffic mapping at the A-BGF.

11. The method for resource and admission control according to claim 10, wherein the step of performing authentication by an Access Admission Control Function hereinafter referred to as A-ACF, to check whether the resource reservation request conforms to operation policy rules and whether the resource reservation request conforms to user profiles further comprises the steps of:
if the operation policy rules are not stored locally, the A-ACF searches in a remote policy server, to obtain operation policy rules related with the service.

12. The method for resource and admission control according to claim 10, wherein the step of performing authentication by an Access Admission Control Function hereinafter referred to as A-ACF, to check whether the resource reservation request conforms to operation policy rules and whether the resource reservation request conforms to user profiles further comprises the steps of:
if the user profiles are not stored locally, the A-ACF interacts with a Network Attachment Subsystem hereinafter referred to as NASS via the I1 interface, to obtain user profiles related with the service.

13. The method for resource and admission control according to claim 10, wherein for any cross-operator application service media flow, the method further comprises the following steps:
after receiving a resource reservation request via an Id interface, performing authentication by an I-ACF, to check whether the resource reservation request conforms to a Service Level Agreement hereinafter referred to as SLA, the operation policy rules, and the transport resource availability of interconnecting link between operators;
if the application service media flow is towards the core network and a C-RCF is provided in the core network, forwarding the resource reservation request from the I-ACF to the C-RCF via an X3 interface to check the transport resource availability in the core network, and obtaining the check result of transport resource availability in the core network from the C-RCF; the check result carrying QoS class, bandwidth and ingress path information assigned to the application service media flow;
making an admission control decision by the I-ACF in accordance with the check result of service level agreement, the check result of operation policy rules, and the check result of transport resource availability between operators, and determining the admission control parameters for the cross-operator application service media flow; the control parameter including gate control, bandwidth allocation, QoS class, and ingress path information;
returning the authentication and admission control decision result for the resource reservation request from the I-ACF to an Interconnection Border Control Function (IBCF) via the Id interface;
if the admission control decision result is "permit", the I-ACF sending the admission control parameters to an Interconnection Border Gateway Function hereinafter referred to as I-BGF in push or pull mode via a G3 interface, to control gate operations, packet marking, and traffic policing at the I-BGF.

14. The method for resource and admission control according to claim 10 or 13, further comprising the steps of:
during the process of creating the application service session, the application service control function determining the resource reservation requirements of the application service media flow and sending a resource reservation quest containing the resource reservation requirements to the A-ACFs at initiating end and destination end of the media flow via the Gq interface, respectively;
during the application service session process, the application service control function sending a resource reservation modification request to the A-ACFs at the initiating end and the destination end of the media flow via the Gq interface as required, to instruct the A-ACFs to modify the original resource reservation and admission control parameters;
when the application service session is completed, the application service control function sending a resource release request to the A-ACFs at the initiating side and the destination side of the media flow via the Gq interface, to instruct the A-ACFs to release the original resource reservation and admission control parameters.

15. The method for resource and admission control according to claim 14, wherein for any cross-operator application service media flow, the method further comprises the steps of:
during the process of creating a session of the cross-operator application service, the IBCF determining the resource reservation requirements of the cross-operator application service media flow and sending a resource reservation request containing the requirements to the I-ACF via the Id interface;
during the session of the cross-operator application service, the IBCF sending a resource reservation modification request to the I-ACF via the Id interface as required, to instruct the I-ACF to modify the original resource reservation and admission control parameters;
when the session of the cross-operator application service is completed, the IBCF sending a resource release request to the I-ACF via the Id interface, to instruct the I-ACF to release the original resource reservation and admission control parameters.

## Patentansprüche

1. Ressourcen- und Zulassungssteuer-Subsystem in einem Netzwerk der nächsten Generation, **dadurch gekennzeichnet, dass** es aufweist:
eine Zugriffszulassungs-Steuerfunktion, die nachfolgend als A-ACF bezeichnet wird, die ausgebildet ist, eine Ressourcenreservierungsanforderung von einem Anwendungsservicemedienfluss zu empfangen, eine Authentisierung durchzuführen und eine Zulassungssteuerentscheidung für die Ressourcenreservierungsanforderung auf der Grundlage von Benutzerprofil, Operationskontrollregeln und Transportressourcenverfügbarkeit zu fällen und eine Zugriffsgrenzen-Gatewayfunktion, die nachfolgend als A-BGF bezeichnet wird, zwischen einem Zugriffsnetzwerk und einem Kernnetzwerk gemäß dem Zulassungssteuer-Entscheidungsergebnis zu steuern;
eine Verbindungszulassungs-Steuerfunktion, die nachfolgend als I-ACF bezeichnet wird, die ausgebildet ist zum Empfangen einer Ressourcenreservierungsanforderung von einem Kreuzoperator-Anwendungsservicemedienfluss, Durchführen einer Authentisierung und Fällen einer Zulassungssteuerungsentscheidung für eine Ressourcenreservierungsanforderung auf der Grundlage von Benutzerprofil, Operationskontrollregeln und Transportressourcenverfügbarkeit, und zum Steuern einer Verbindungsgrenzen-Gatewayfunktion, die nachfolgend als I-BGF bezeichnet wird, zwischen den Kernnetzwerken gemäß dem Zulassungssteuer-Entscheidungsergebnis;
eine Gq-Schnittstelle;
eine Go-Schnittstelle;
eine Id-Schnittstelle; und
eine G3-Schnittstelle;
worin eine Anwendungsservice-Steuerfunktion in jedem NGN-Anwendungsservice-Subsystem mit dem A-ACF über die Gq-Schnittstelle zusammenwirkt, um die Ressourcenreservierungsanforderungen des Anwendungsservicemedienflusses zu der A-ACF durch die Ressourcenreservierungsanforderung zu senden;
die A-ACF die A-BGF über die Go-Schnittstelle steuert;
eine Verbindungsgrenzen-Steuerfunktion, die nachfolgend als IBCF bezeichnet wird, die Ressourcenreservierungsanforderungen des Kreuzoperator-Anwendungsservicemedienflusses zu der I-ACF durch die Ressourcenreservierungsanforderung über die Id-Schnittstelle sendet;
die I-ACF die I-BGF über die G3-Schnittstelle steuert.

2. Ressourcen- und Zulassungssteuer-Subsystem in einem Netzwerk der nächsten Generation gemäß Anspruch 1, **dadurch gekennzeichnet, dass**:
die A-ACF weiterhin ausgebildet ist zum Empfangen der Ressourcenreservierungsanforderung von dem Anwendungsservicemedienfluss für eine Transportschicht des Netzwerks;
die I-ACF weiterhin ausgebildet ist zum Empfangen der Ressourcenreservierungsanforderung von dem Kreuzoperator-Anwendungsservicemedienfluss für die Transportschicht des Netzwerks;
worin die Anwendungsservice-Steuerfunktion in jedem NGN-Anwendungsservice-Subsystem mit der A-ACF über die Gq-Schnittstelle zusammenwirkt, um die Ressourcenreservierungsanforderungen des Anwendungsservicemedienflusses für die Transportschicht zu der A-ACF durch die Ressourcenreservierungsanforderung zu senden;
die A-ACF die A-BGF an der Grenze zwischen dem Zugriffsnetzwerk und dem Kernnetzwerk über die Go-Schnittstelle steuert, gemäß dem Zulassungssteuer-Entscheidungsergebnis, um die Funktionen durchzuführen: Toröffnung oder -schließung, wobei das "Tor" eine Paketfilterung durch IP-Adresse/Port anzeigt, Paketmarkierung für abgehenden Verkehr, Bandbreitenreservierung und -zuweisung für kommenden/abgehenden Verkehr, IP-Adresse und Portübersetzung, Kontrollieren von kommendem Verkehr, paketfilterungsbasierte Firewall, und Messung der Verwendung für den Medienfluss;
die IBCF mit der I-ACF über die Id-Schnittstelle zusammenwirkt, um die Ressourcenreservierungsanforderungen des Kreuzoperator-Anwendungsservicemedienflusses für die Transportschicht zu der I-ACF durch die Ressourcenreservierungsanforderung zu senden;
die I-ACF die I-BGF an der Grenze zwischen den Kernnetzwerken über die G3-Schnittstelle steuert, gemäß dem Zulassungssteuer-Entscheidungsergebnis, um die Funktionen der Toröffnung oder -schließung, der Paketmarkierung für abgehenden Verkehr, der Bandbreitenreservierung und -zuteilung für kommenden/abgehenden Verkehr, der IP-Adresse und Portübersetzung, der Kontrolle von kommendem Verkehr, der paketfilterungsbasierten Firewall und der Messung der Verwendung für den Medienfluss durchzuführen.

3. Ressourcen- und Zulassungssteuer-Subsystem in einem Netzwerk der nächsten Generation nach Anspruch 2, welches weiterhin aufweist:
eine Ressourcensteuerfunktion im Zugriffsnetzwerk, die nachfolgend als A-RCF bezeichnet wird, die Zustandsinformationen enthaltend die Topologie und Bandbreite von Transportressourcen in dem Zugriffsnetzwerk erwirbt, QoS-bezogene Verkehrshandhabung und Ressourcenreservierungsaktivitäten einer Verkehrsebenenfunktion im Zugriffsnetzwerk, die nachfolgend als A-TPF bezeichnet wird, steuert, eine Datenbank der Transportressourcenverfügbarkeit und des Ressourcenzuteilungszustands aufrechterhält, die Transportressourcenverfügbarkeit gemäß der Ressourcenreservierungsanforderung von der A-ACF prüft, eine Prüfung und Ressourcenzuteilung auf der Grundlage der Ressourcenzustands-Datenbank durchführt, den Ressourcenzuteilungszustand aktualisiert und das Prüfergebnis der Transportressourcenverfügbarkeit zurückkehrt;
eine Ressourcensteuerfunktion im Kernnetzwerk, die nachfolgend als C-RCF bezeichnet wird, die Zustandsinformationen enthaltend die Topologie und Bandbreite von Transportressourcen in dem Kernnetzwerk erwirbt, QoS-bezogene Verkehrshandhabung und Ressourcenreservierungsaktivitäten einer Verkehrsebenenfunktion im Kernnetzwerk, die nachfolgend als C-TPF bezeichnet wird, steuert, eine Datenbank der Transportressourcenverfügbarkeit und des Ressourcenzuteilungszustands aufrechterhält, die Transportressourcenverfügbarkeit gemäß der Ressourcenreservierungsanforderung von der A-ACF oder I-ACF prüft, eine Prüfung und Ressourcenzuteilung auf der Grundlage der Ressourcenzustands-Datenbank durchführt, den Ressourcenzuteilungszustand aktualisiert und das Prüfergebnis der Transportressourcenverfügbarkeit zurückkehrt;
eine G2-Schnittstelle;
eine Gl-Schnittstelle;
eine X1-Schnittstelle; und
eine X2-Schnittstelle;
worin die C-RCF Transportressourcen-Zustandsinformationen in dem Kernnetzwerk über die G2-Schnittstelle erwirbt und eine QoS-bezogene Verkehrshandhabung und Ressourcenreservierungsaktivitäten der C-TPF steuert;
die A-RCF Transportressourcen-Zustandsinformationen in dem Zugriffsnetzwerk über die G1-Schnittstelle erwirbt und QoS-bezogene Verkehrshandhabung und Ressourcenreservierungsaktivitäten der A-TPF steuert;
die A-RCF mit der A-ACF über die X1-Schnittstelle zusammenwirkt, um die Transportressourcenverfügbarkeits-Prüfanforderung von der A-ACF zu empfangen und das Prüfergebnis der Transportressourcenverfügbarkeit in dem Zugriffsnetzwerk zu der A-ACF zurückzuführen; und
die C-RCF mit der A-ACF über die X2-Schnittstelle zusammenwirkt, um die Transportressourcenverfügbarkeit-Prüfanforderung von der A-ACF zu empfangen und das Prüfergebnis der Transportressourcenverfügbarkeit in dem Kernnetzwerk zu der A-ACF zurückzuführen.

4. Ressourcen- und Zulassungssteuer-Subsystem in einem Netzwerk der nächsten Generation gemäß Anspruch 2 oder 3, weiterhin aufweisend eine X3-Schnittstelle, worin die C-RCF mit der I-ACF über die X3-Schnittstelle zusammenwirkt, um die Transportressourcenverfügbarkeits-Prüfanforderung von der I-ACF zu empfangen und das Prüfergebnis der Transportressourcenverfügbarkeit in dem Zugriffsnetzwerk zu der I-ACF zurückzuführen.

5. Ressourcen- und Zulassungssteuer-Subsystem in einem Netzwerk der nächsten Generation gemäß Anspruch 2, weiterhin aufweisend eine X4-Schnittstelle, worin die I-ACF mit einem Ressourcen- und Zulassungssteuer-Subsystem, das nachfolgend als RACS bezeichnet wird, in irgendeinem anderen Operatornetzwerk über die X4-Schnittstelle zusammenwirkt, um die Ressourcenreservierungsanforderungen von Kreuzoperator-Anwendungsservicemedienflüssen weiterzugeben.

6. Ressourcen- und Zulassungssteuer-Subsystem in einem Netzwerk der nächsten Generation gemäß Anspruch 2, weiterhin aufweisend eine 11-Schnittstelle, worin die A-ACF mit einem Netzwerk-Zusatzanschluss-Subsystem, das nachfolgend als NASS bezeichnet wird, über die I1-Schnittstelle zusammenwirkt, um Benutzerprofile zu erhalten.

7. Ressourcen- und Zulassungssteuer-Subsystem in einem Netzwerk der nächsten Generation gemäß Anspruch 2 oder 3, bei dem sowohl ACF als auch RCF logische funktionelle Einheiten sind, die getrennte körperliche Vorrichtungen oder in andere körperliche Vorrichtungen integrierte funktionelle Module sind.

8. Ressourcen- und Zulassungssteuer-Subsystem in einem Netzwerk der nächsten Generation gemäß Anspruch 2 oder 3, bei dem in jeder Netzwerk-Verwaltungsdomäne eine zentralisierte RCF oder mehrere RCFs, die in Subdomänen verteilt sind, gemäß dem Netzwerkmaßstab und dem Typ von Transporttechnologie vorgesehen sind;
wenn mehrere in den Subdomänen verteilte RCFs in einer Verwaltungsdomäne vorgesehen sind, die RCFs über eine universelle und erweiterbare Protokollschnittstelle zusammenwirken und einander koordinieren können, um eine Prüfung der Kantezu-Kante-Transportressourcenverfügbarkeit für die Ressourcenreservierungsanforderung über die gesamte Verwaltungsdomäne zu erzielen.

9. Ressourcen- und Zulassungssteuer-Subsystem in einem Netzwerk der nächsten Generation gemäß Anspruch 2 oder 3, bei dem RCFs in verschiedenen Netzwerk-Verwaltungsdomänen über ACFs miteinander verbunden sind; wenn eine vertrauende Beziehung zwischen den verschiedenen Netzwerk-Verwaltungsdomänen vorhanden ist, sind die RCFs in den verschiedenen Netzwerk-Verwaltungsdomänen über Schnittstellen miteinander verbunden und tauschen Informationen miteinander aus.

10. Verfahren zur Ressourcen- und Zulassungssteuerung in einem Netzwerk der nächsten Generation, **gekennzeichnet durch** die Schritte:
Durchführen einer Authentisierung **durch** eine Zugriffszulassungs-Steuerfunktion, die nachfolgend als A-ACF bezeichnet wird, nach dem Empfangen einer Ressourcenreservierungsanforderung von einer Gq-Schnittstelle, um zu prüfen, ob die Ressourcenreservierungsanforderung Operationskontrollregeln entspricht, und ob die Ressourcenreservierungsanforderung Benutzerprofilen entspricht;
wenn eine Ressourcensteuerfunktion im Zugriffsnetzwerk, die nachfolgend als A-RCF bezeichnet wird, vorgesehen ist, Weiterleiten der Ressourcenreservierungsanforderung von der A-ACF zu der A-RCF über eine X1-Schnittstelle, um die Transportressourcenverfügbarkeit in dem Zugriffsnetzwerk zu prüfen, und Erhalten des Prüfergebnisses der Transportressourcenverfügbarkeit in dem Zugriffsnetzwerk von der A-RCF; wobei das Prüfergebnis die QoS-Klasse, Bandbreite und einem Anwendungsservicemedienfluss zugewiesene Eindringpfadinformationen trägt;
wenn der Anwendungsservicemedienfluss zu einem Kernnetzwerk hin ist und eine Ressourcensteuerfunktion im Kernnetzwerk, die nachfolgend als C-RCF bezeichnet ist, vorgesehen ist, Weiterleiten der Ressourcenreservierungsanforderung von der A-ACF zu der C-RCF über eine X2-Schnittstelle, um die Transportressourcenverfügbarkeit in dem Kernnetzwerk zu prüfen, und Erhalten des Prüfergebnisses der Transportressourcenverfügbarkeit in dem Kernnetzwerk von der C-RCF; wobei das Prüfergebnis die QoS-Klasse, Bandbreite und dem Anwendungsservicemedienfluss zugewiesene Eindringpfadinformationen trägt;
Fällen einer Zulassungssteuerentscheidung **durch** die A-ACF gemäß dem Prüfergebnis von Operationskontrollregeln, dem Prüfergebnis von Benutzerprofilen und dem Prüfergebnis von Transportressourcenverfügbarkeit, und Bestimmen von Zulassungssteuerparametern für den Anwendungsservicemedienfluss; wobei die Steuerparameter die Torsteuerung, Bandbreitenzuweisung, QoS-Markierung und Eindringpfadinformationen enthalten; Zurückführen der Authentisierung und des Zulassungssteuer-Entscheidungsergebnisses für die Ressourcenreservierungsanforderung von der A-ACF zu einer Anwendungsservice-Steuerfunktion über eine Gq-Schnittstelle;
wenn das Zulassungssteuer-Entscheidungsergebnis "zulassen" ist, Senden der Zulassungssteuerparameter von der A-ACF zu einer Zugriffsgrenzen-Gatewayfunktion (A-BGF) im Gegentaktbetrieb über eine Go-Schnittstelle, um Toroperationen, Paketmarkieren und Verkehrskartieren bei der A-BGF zu steuern.

11. Verfahren zur Ressourcen- und Zulassungssteuerung gemäß Anspruch 10, bei dem der Schritt des Durchführens der Authentisierung durch eine Zugriffszulassungs-Steuerfunktion, die nachfolgend als A-ACF bezeichnet wird, um zu prüfen, ob die Ressourcenreservierungsanforderung Operationskontrollregeln entspricht und ob die Ressourcenreservierungsanforderung Benutzerprofilen entspricht, weiterhin die Schritte aufweist:
wenn die Operationskontrollregeln nicht lokal gespeichert sind, sucht die A-ACF in einem entfernten Kontrollserver, um auf den Service bezogene Operationskontrollregeln zu erhalten.

12. Verfahren zur Ressourcen- und Zulassungssteuerung gemäß Anspruch 10, bei dem der Schritt des Durchführens einer Authentisierung durch eine Zugriffszulassungs-Steuerfunktion, die nachfolgend als A-ACF bezeichnet wird, um zu prüfen, ob die Ressourcenreservierungsanforderung Operationskontrollregeln entspricht und ob die Ressourcenreservierungsanforderung Benutzerprofilen entspricht, weiterhin die Schritte aufweist:
wenn die Benutzerprofile nicht lokal gespeichert sind, wirkt die A-ACF mit einem Netzwerk-Zusatzanschluss-Subsystem, das nachfolgend als NASS bezeichnet wird, über die Il-Schnittstelle zusammen, um auf den Service bezogene Benutzerprofile zu erhalten.

13. Verfahren zur Ressourcen- und Zulassungssteuerung gemäß Anspruch 10, bei dem für jeden Kreuzoperator-Anwendungsservicemedienfluss das Verfahren weiterhin die folgenden Schritte aufweist:
Durchführen einer Authentisierung durch eine I-ACF nach dem Empfangen einer Ressourcenreservierungsanforderung über eine Id-Schnittstelle, um zu prüfen, ob die Ressourcenreservierungsanforderung einer Servicepegelvereinbarung, die nachfolgend als SLA bezeichnet wird, den Operationskontrollregeln und der Transportressourcenverfügbarkeit der Verbindung zwischen Operatoren entspricht;
wenn der Anwendungsservicemedienfluss zu dem Kernnetzwerk hin ist und eine C-RCF in dem Kernnetzwerk vorgesehen ist, Weiterleiten der Ressourcenreservierungsanforderung von der I-ACF zu der C-RCF über eine X3-Schnittstelle, um die Transportressourcenverfügbarkeit in dem Kernnetzwerk zu prüfen, und Erhalten des Prüfergebnisses der Transportressourcenverfügbarkeit in dem Kernnetzwerk von der C-RCF; wobei das Prüfergebnis die QoS-Klasse, Bandbreite und dem Anwendungsservicemedienfluss zugewiesene Eindringpfadinformationen trägt;
Fällen einer Zulassungssteuerentscheidung durch die I-ACF gemäß dem Prüfergebnis der Servicepegelvereinbarung, dem Prüfergebnis von Operationskontrollregeln und dem Prüfergebnis der Transportressourcenverfügbarkeit zwischen Operatoren, und Bestimmen der Zulassungssteuerparameter für den Kreuzoperator-Anwendungsservicemedienfluss; wobei die Steuerparameter die Torsteuerung, Bandbreitenzuweisung, QoS-Klasse und Eindringpfadinformationen enthalten; Zurückführen der Authentisierung und des Zulassungssteuer-Entscheidungsergebnisses für die Ressourcenreservierungsanforderung von der I-ACF zu einer Verbindungsgrenzen-Steuerfunktion (IBCF) über die Id-Schnittstelle;
wenn das Zulassungssteuer-Entscheidungsergebnis "zulassen" ist, sendet die I-ACF die Zulassungssteuerparameter zu einer Verbindungsgrenzen-Gatewayfunktion, die nachfolgend als I-BGF bezeichnet wird, im Gegentaktbetrieb über eine G3-Schnittstelle, um Toroperationen, Paketmarkieren und das Verkehrsverfahren bei der I-BGF zu steuern.

14. Verfahren zur Ressourcen- und Zulassungssteuerung gemäß Anspruch 10 oder 13, weiterhin die Schritte aufweisend:
während des Vorgangs der Schaffung der Anwendungsservicesession bestimmt die Anwendungsservice-Steuerfunktion die Ressourcenreservierungsanforderungen des Anwendungsservicemedienflusses und sendet eine Ressourcenreservierungssuche enthaltend die Ressourcenreservierungsanforderungen zu den A-ACFs am initiierenden Ende bzw. Bestimmungsende des Medienflusses über die Gq-Schnittstelle;
während des Anwendungsservicesessionvorgangs sendet die Anwendungsservice-Steuerfunktion eine Ressourcenreservierungs-Modifikationsanforderung zu den A-ACFs an dem initiierenden Ende und dem Bestimmungsende des Medienflusses über die Gq-Schnittstelle, wie gefordert ist, um die A-ACFs anzuweisen, die ursprüngliche Ressourcenreservierung und Zulassungssteuerparameter zu modifizieren;
wenn die Anwendungsservicesession beendet ist, sendet die Anwendungsservice-Steuerfunktion eine Ressourcenfreigabeanforderung zu den A-ACFs an der initiierenden Seite und der Bestimmungsseite des Medienflusses über die Gq-Schnittstelle, um die A-ACFs anzuweisen, die ursprüngliche Ressourcenreservierung und Zulassungssteuerparameter freizugeben.

15. Verfahren zur Ressourcen- und Zulassungssteuerung gemäß Anspruch 14, bei dem für jeden Kreuzoperator-Anwendungsservicemedienfluss das Verfahren weiterhin die Schritte aufweist:
während des Vorgangs des Schaffens einer Session des Kreuzoperator-Anwendungsservices bestimmt die IBCF die Ressourcenreservierungsanforderungen des Kreuzoperator-Anwendungsservicemedienflusses und sendet eine Ressourcenreservierungsanforderung enthaltend die Anforderungen über die Id-Schnittstelle zu der I-ACF;
während der Session des Kreuzoperator-Anwendungsservices sendet die IBCF eine Ressourcenreservierungs-Modifikationsanforderung wie gefordert über die Id-Schnittstelle der zu I-ACF, um die I-ACF anzuweisen, die ursprüngliche Ressourcenreservierung und Zulassungssteuerparameter zu modifizieren;
wenn die Session des Kreuzoperator-Anwendungsservices beendet ist, sendet die IBCF eine Ressourcenfreigabeanforderung über die Id-Schnittstelle zu der I-ACF, um die I-ACF anzuweisen, die ursprüngliche Ressourcenreservierung und Zulassungssteuerparameter freizugeben.

## Revendications

1. Sous-système de commande d'admission et de ressources dans un réseau de nouvelle génération, **caractérisé en ce qu'**il comprend :
une fonction de commande d'admission d'accès indiquée ci-après par A-ACF, qui est adaptée pour recevoir une requête de réservation de ressources à partir d'un flux de support de service d'applications, effectuer une authentification et prendre une décision de commande d'admission pour la requête de réservation de ressources sur la base d'un profil d'utilisateur, de règles de politique de fonctionnement et une disponibilité de ressources de transport, et commander une fonction de passerelle frontalière d'accès indiquée ci-après par A-BGF entre un réseau d'accès et un réseau central en fonction du résultat de décision de commande d'admission ;
une fonction de commande d'admission d'interconnexion indiquée ci-après par I-ACF, qui est adaptée pour recevoir une requête de réservation de ressources à partir d'un flux de support de service d'applications d'opérateurs croisés, effectuer une authentification et prendre une décision de commande d'admission pour la requête de réservation de ressources sur la base d'un profil d'utilisateur, de règles de politique de fonctionnement et une disponibilité de ressources de transport, et commander une fonction de passerelle frontalière d'interconnexion indiquée ci-après par I-BGF entre les réseaux centraux en fonction du résultat de décision de commande d'admission ;
une interface Gq ;
une interface Go ;
une interface Id ; et
une interface G3 ;
dans lequel une fonction de commande de service d'application dans chaque sous-système de service d'applications de réseau de nouvelle génération interagit avec l'A-ACF via l'interface Gq, pour envoyer les conditions de réservation de ressources du flux de support de service d'applications à l'A-ACF par le biais de la requête de réservation de ressources ;
l'A-ACF commande l'A-BGF via l'interface Go ;
une fonction de commande frontalière d'interconnexion indiquée ci-après par IBCF envoie les conditions de réservation de ressources du flux de support de service d'applications d'opérateurs croisés à l'I-ACF par le biais de la requête de réservation de ressources via l'interface Id ;
l'I-ACF commande l'I-BGF via l'interface G3.

2. Sous-système de commande d'admission et de ressources dans un réseau de nouvelle génération selon la revendication 1, **caractérisé en ce que** :
l'A-ACF est adaptée en outre pour recevoir la requête de réservation de ressources à partir du flux de support de service d'applications pour une couche transport du réseau ;
l'I-ACF est adaptée en outre pour recevoir la requête de réservation de ressources à partir du flux de support de service d'applications d'opérateurs croisés pour la couche transport du réseau ;
dans lequel la fonction de commande de service d'application dans chaque sous-système de service d'applications de réseau de nouvelle génération interagit avec l'A-ACF via l'interface Gq, pour envoyer les conditions de réservation de ressources du flux de support de service d'applications pour la couche transport à l'A-ACF par le biais de la requête de réservation de ressources ;
l'A-ACF commande l'A-BGF à la frontière entre le réseau d'accès et le réseau central via l'interface Go, en fonction du résultat de décision de commande d'admission, pour effectuer les fonctions suivantes : ouverture ou fermeture de porte, la "porte" indiquant filtrage de paquets par adresse IP/port, marquage de paquets pour trafic sortant, réservation ou attribution de largeur de bande pour trafic entrant/sortant, translation d'adresse IP et de port, contrôle de trafic entrant, coupe-feu basé sur filtrage de paquets, et mesure d'utilisation, pour le flux de support ;
IBCF interagit avec l'I-ACF via l'interface Id, pour envoyer les conditions de réservation de ressources du flux de support de service d'applications d'opérateurs croisés pour la couche transport à l'I-ACF par le biais de la requête de réservation de ressources ;
l'I-ACF commande l'I-BGF à la frontière entre les réseaux centraux via l'interface G3, en fonction du résultat de décision de commande d'admission, pour effectuer les fonctions d'ouverture ou fermeture de porte, marquage de paquets pour trafic sortant, réservation ou attribution de largeur de bande pour trafic entrant/sortant, translation d'adresse IP et de port, contrôle de trafic entrant, coupe-feu basé sur filtrage de paquets, et mesure d'utilisation, pour le flux de support.

3. Sous-système de commande d'admission et de ressources dans un réseau de nouvelle génération selon la revendication 2, comprenant en outre :
une fonction de commande de ressources dans le réseau d'accès indiquée ci-après par A-RCF, qui acquiert des informations d'état comprenant topologie et largeur de bande de ressources de transport dans le réseau d'accès, commande la gestion de trafic relative à la qualité de service et des activités de réservation de ressources d'une fonction de plan de trafic dans le réseau d'accès indiquée ci-après par A-TPF, maintient une base de données de disponibilité de ressources de transport et d'état d'attribution de ressources, vérifie la disponibilité de ressources de transport en fonction de la requête de réservation de transport provenant de l'A-ACF, effectuer la vérification et l'attribution de ressources sur la base de la base de données d'état de ressources, met à jour l'état d'attribution de ressources, et renvoie le résultat de vérification de disponibilité de ressources de transport ;
une fonction de commande de ressources dans le réseau central indiquée ci-après par C-RCF, qui acquiert des informations d'état comprenant topologie et largeur de bande de ressources de transport dans le réseau d'accès, commande la gestion de trafic relative à la qualité de service et des activités de réservation de ressources d'une fonction de plan de trafic dans le réseau central indiquée ci-après par C-TPF, maintient une base de données de disponibilité de ressources de transport et d'état d'attribution de ressources, vérifie la disponibilité de ressources de transport en fonction de la requête de réservation de transport provenant de l'A-ACF ou de l'I-ACF, effectuer la vérification et l'attribution de ressources sur la base de la base de données d'état de ressources, met à jour l'état d'attribution de ressources, et renvoie le résultat de vérification de disponibilité de ressources de transport ;
une interface G2 ;
une interface G1 ;
une interface X1 ; et
une interface X2 ;
dans lequel la C-RCF acquiert des informations d'état de ressources de transport dans le réseau central via l'interface G2 et commande la gestion de trafic relative à la qualité de service et des activités de réservation de ressources de la C-TPF ;
l'A-RCF acquiert des informations d'état de ressources de transport dans le réseau d'accès via l'interface G1 et commande la gestion de trafic relative à la qualité de service et des activités de réservation de ressources de l'A-TPF ;
l'A-RCF interagit avec l'A-ACF via l'interface X1, pour recevoir la requête de vérification de disponibilité de ressources de transport à partir de l'A-ACF et renvoie le résultat de vérification de disponibilité de ressources de transport dans le réseau d'accès à l'A-ACF ; et
la C-RCF interagit avec l'A-ACF via l'interface X2, pour recevoir la requête de vérification de disponibilité de ressources de transport à partir de l'A-ACF et renvoie le résultat de vérification de disponibilité de ressources de transport dans le réseau central à l'A-ACF.

4. Sous-système de commande d'admission et de ressources dans un réseau de nouvelle génération selon la revendication 2 ou 3, comprenant en outre une interface X3, dans lequel la C-RCF interagit avec l'I-ACF via l'interface X3, pour recevoir la requête de vérification de disponibilité de ressources de transport à partir de l'I-ACF et renvoie le résultat de vérification de disponibilité de ressources de transport dans le réseau d'accès à l'I-ACF

5. Sous-système de commande d'admission et de ressources dans un réseau de nouvelle génération selon la revendication 2, comprenant en outre une interface X4, dans lequel l'I-ACF interagit avec un sous-système de commande de ressources et d'admission indiqué ci-après par RACS dans n'importe quel autre réseau d'opérateur via l'interface X4, pour retransmettre la requête de réservation de ressources de flux de support de service d'applications d'opérateurs croisés.

6. Sous-système de commande d'admission et de ressources dans un réseau de nouvelle génération selon la revendication 2, comprenant en outre une interface I1, dans lequel l'A-ACF interagit avec un sous-système d'attache au réseau indiqué ci-après par NASS via l'interface I1, pour obtenir des profils d'utilisateur.

7. Sous-système de commande d'admission et de ressources dans un réseau de nouvelle génération selon la revendication 2 ou 3, dans lequel ACF et RCF sont toutes deux des entités fonctionnelles logiques, qui sont des dispositifs physiques séparés ou des modules fonctionnels intégrés dans d'autres dispositifs physiques.

8. Sous-système de commande d'admission et de ressources dans un réseau de nouvelle génération selon la revendication 2 ou 3, dans lequel
dans chaque domaine d'administration de réseau, une RCF centralisée ou une pluralité de RCF distribuées en sous-domaines sont prédisposées en fonction de l'échelle de réseau et du type de technologie de transport ;
si une pluralité de RCF distribuée dans les sous-domaines est prédisposée dans un domaine d'administration, les RCF peuvent interagir et se coordonner entre elles via une interface de protocole universelle et extensible, de manière à accomplir une vérification de disponibilité de ressources de transport bord à bord pour la requête de réservation de ressources à travers tout le domaine d'administration.

9. Sous-système de commande d'admission et de ressources dans un réseau de nouvelle génération selon la revendication 2 ou 3, dans lequel des RCF dans différents domaines d'administration de réseau sont interconnectées via des ACF ; s'il existe un rapport de confiance entre les différents domaines d'administration de réseau, les RCF dans les différents domaines d'administration de réseau s'interfacent entre elles et échangent des informations entre elles.

10. Procédé de commande d'admission et de ressources dans un réseau de nouvelle génération, **caractérisé en ce qu'**il comprend les étapes consistant à :
après réception d'une requête de réservation de ressources à partir d'une interface Gq, effectuer une authentification par une fonction de commande d'admission d'accès indiquée ci-après par A-ACF, pour vérifier si la requête de réservation de ressources est conforme à des règles de politique de fonctionnement et si la requête de réservation de ressources est conforme à des profils d'utilisateurs ;
si une fonction de commande de ressources dans le réseau d'accès indiquée ci-après par A-RCF est prédisposée, retransmettre la requête de réservation de ressources de l'A-ACF à l'A-RCF via une interface X1 pour vérifier la disponibilité de ressources de transport dans le réseau d'accès et obtenir un résultat de vérification de disponibilité de ressources de transport dans le réseau d'accès à partir de l'A-RCF ; le résultat de vérification comportant des informations de classe de qualité de service, largeur de bande et parcours d'entrée attribuées à un flux de support de service d'applications ;
si le flux de support de service d'applications est vers un réseau central et une fonction de commande de ressources dans le réseau central indiquée ci-après par C-RCF est prédisposée, retransmettre la requête de réservation de ressources de l'A-ACF à la C-RCF via une interface X2 pour vérifier la disponibilité de ressources de transport dans le réseau central et obtenir un résultat de vérification de disponibilité de ressources de transport dans le réseau central à partir de la C-RCF ; le résultat de vérification comportant des informations de classe de qualité de service, largeur de bande et parcours d'entrée attribuées à un flux de support de service d'applications ;
prendre une décision de commande d'admission par l'A-ACF en fonction du résultat de vérification de règles de politique de fonctionnement, du résultat de vérification de profils d'utilisateur et du résultat de vérification de disponibilité de ressources de transport, et déterminer des paramètres de commande d'admission pour le flux de support de service d'applications ; les paramètres de commande d'admission comprenant des informations de commande de porte, attribution de largeur de bande, marquage de qualité de service et parcours d'entrée ;
renvoyer le résultat d'authentification et de décision de commande d'admission pour la requête de réservation de ressources de l'A-ACF à une fonction de passerelle frontalière d'accès (A-BGF) en mode d'insertion ou d'extraction via une interface Go, pour commander des opérations de porte, marquage de paquets et mappage de trafic au niveau de l'A-BGF.

11. Procédé de commande d'admission et de ressources selon la revendication 10, dans lequel l'étape d'exécution d'authentification par une fonction de commande d'admission d'accès indiquée ci-après par A-ACF, pour vérifier si la requête de réservation de ressources est conforme à des règles de politique de fonctionnement et si la requête de réservation de ressources est conforme à des profils d'utilisateurs comprend en outre les étapes consistant à :
si les règles de politique de fonctionnement ne sont pas mémorisées localement, l'A-ACF recherche dans un serveur de politique à distance, pour obtenir des règles de politique de fonctionnement relatives au service.

12. Procédé de commande d'admission et de ressources selon la revendication 10, dans lequel l'étape d'exécution d'authentification par une fonction de commande d'admission d'accès indiquée ci-après par A-ACF, pour vérifier si la requête de réservation de ressources est conforme à des règles de politique de fonctionnement et si la requête de réservation de ressources est conforme à des profils d'utilisateurs comprend en outre les étapes consistant à :
si les profils d'utilisateur ne sont pas mémorisés localement, l'A-ACF interagit avec un sous-système d'attache au réseau indiqué ci-après par NASS via l'interface I1, pour obtenir des profils d'utilisateur relatifs au service.

13. Procédé de commande d'admission et de ressources selon la revendication 10, dans lequel pour n'importe quel flux de support de service d'applications d'opérateurs croisés, le procédé comprend en outre les étapes consistant à :
après réception d'une requête de réservation de ressources via une interface Id, effectuer une authentification par une I-ACF, pour vérifier si la requête de réservation de ressources est conforme à un accord de niveau de service ci-après indiqué par SLA, aux règles de politique de fonctionnement et à la disponibilité de ressources de transport de liaisons d'interconnexions entre opérateurs ;
si le flux de support de service d'applications est vers un réseau central et une C-RCF est prédisposée dans le réseau central, retransmettre la requête de réservation de ressources de l'I-ACF à la C-RCF via une interface X3 pour vérifier la disponibilité de ressources de transport dans le réseau central et obtenir un résultat de vérification de disponibilité de ressources de transport dans le réseau central à partir de la C-RCF ; le résultat de vérification comportant des informations de classe de qualité de service, largeur de bande et parcours d'entrée attribuées à un flux de support de service d'applications ;
prendre une décision de commande d'admission par l'I-ACF en fonction du résultat de vérification de règles de politique de fonctionnement, et du résultat de vérification de disponibilité de ressources de transport entre opérateurs, et déterminer des paramètres de commande d'admission pour le flux de support de service d'applications d'opérateurs croisés ; les paramètres de commande d'admission comprenant des informations de commande de porte, attribution de largeur de bande, marquage de qualité de service et parcours d'entrée ;
renvoyer le résultat d'authentification et de décision de commande d'admission pour la requête de réservation de ressources de l'I-ACF à une fonction de commande frontalière d'interconnexion (IBCF) via l'interface Id
si le résultat de décision de commande d'admission est "permis", l'I-ACF envoyant les paramètres de commande d'admission à une fonction de passerelle frontalière d'interconnexion indiquée ci-après par I-BGF en mode d'insertion ou d'extraction via une interface G3, pour commander des opérations de porte, marquage de paquets et politique de trafic au niveau de l'I-BGF.

14. Procédé de commande d'admission et de ressources selon la revendication 10 ou 13, comprenant en outre les étapes consistant à :
durant le processus de création de la session de service d'applications, la fonction de commande de service d'applications déterminant les conditions de réservation de ressources du flux de support de service d'applications, et envoyant une requête de réservation de ressources contenant les conditions de réservation de ressources aux A-ACF à l'extrémité de départ et à l'extrémité de destination du flux de support via l'interface Gq, respectivement ;
durant le processus de session de service d'applications, la fonction de commande de service d'application envoyant une requête de modification de réservation de ressources aux A-ACF à l'extrémité de départ et à l'extrémité de destination du flux de support via l'interface Gq comme nécessaire, pour donner instruction aux A-ACF de modifier les paramètres d'origine de commande de réservation de ressources et d'admission ;
quand la session de service d'applications est terminée, la fonction de commande de service d'application envoyant une requête de libération de ressources aux A-ACF à l'extrémité de départ et à l'extrémité de destination du flux de support via l'interface Gq, pour donner instruction aux A-ACF de libérer les paramètres d'origine de commande de réservation de ressources et d'admission.

15. Procédé de commande d'admission et de ressources selon la revendication 14, dans lequel pour n'importe quel flux de support de service d'applications d'opérateurs croisés, le procédé comprend en outre les étapes consistant à :
durant le processus de création d'une session de service d'applications d'opérateurs croisés, l'IBCF déterminant les conditions de réservation de ressources du flux de support de service d'applications d'opérateurs croisés et envoyant une requête de réservation de ressources contenant les conditions à l'I-ACF via l'interface Id ;
durant la session de service d'applications d'opérateurs croisés, l'IBCF envoyant une requête de modification de réservation de ressources à l'I-ACF à via l'interface Id comme nécessaire, pour donner instruction à l'I-ACF de modifier les paramètres d'origine de commande de réservation de ressources et d'admission ;
quand la session de service d'applications d'opérateurs croisés est terminée, l'IBCF envoyant une requête de libération de ressources à l'I-ACF via l'interface Id, pour donner instruction à l'I-ACF de libérer les paramètres d'origine de commande de réservation de ressources et d'admission.
